# DEMANDE DE BREVET EUROPEEN

(11) **EP 1 639 896 A1**
(43) Date de publication de la demande: **29.03.2006**
(21) Numéro de dépôt: 05300777.9
(22) Date de dépôt: 27.09.2005
(51) Int. Cl.: A21D 13/00, A23L 1/31, A23L 1/317, A23L 1/325, A23L 1/00, A21B 5/02

(54) **Procédé de fabrication d'un produit alimentaire comprenant une partie centrale enrobée de pâte, et dispositif pour sa mise en oeuvre**

(30) Priorité: 27.09.2004 FR 0452173
(71) Demandeur: MONGO, 47310 Estillac (FR)
(72) Inventeur: Bezard, Pascal, 33110, Le Bouscat (FR)
(74) Mandataire: Fantin, Laurent

(57) **Abrégé**

L'objet de l'invention est un procédé de fabrication d'un produit alimentaire comprenant une partie centrale (12) enrobée de pâte (16), caractérisé en ce qu'il consiste à déposer la partie centrale (12) dans un moule comprenant au moins une alvéole (22), ladite alvéole ayant des dimensions appropriées de manière à ménager un espace entre ladite partie centrale (22) et la paroi de l'alvéole (22), à injecter de la pâte (16) dans l'alvéole de manière à enrober la partie centrale (12) et à cuire l'ensemble partie centrale/pâte.

## Description

La présente invention se rapporte à un procédé de fabrication d'un produit alimentaire comprenant une partie centrale enrobée de pâte, à un dispositif pour la mise en oeuvre dudit procédé ainsi qu'à un produit alimentaire obtenu selon le procédé.

Dans le domaine de la restauration, on connaît la pizza. Ce produit alimentaire comprend une pâte sur laquelle sont rapportés différents ingrédients, tels que de la sauce tomate et du fromage par exemple, l'ensemble étant par la suite cuit. Ce type de produit simple a réalisé ne donne pas pleinement satisfaction car le consommateur ne peut pas le manger à la manière d'un sandwich.

Dans le domaine de la restauration rapide, on connaît le sandwich. Ce produit comprend généralement deux tranches de pain ou de pain de mie entre lesquelles sont disposés différents ingrédients crus ou cuits, chauds ou froids. Un type de sandwich, appelé « hot-dog », consiste à placer une saucisse chaude à l'intérieur d'un sandwich dont l'intérieur a été chauffée à l'aide d'un doigt contenant une résistance.

Le principal avantage des sandwichs et des pizzas réside dans le fait qu'ils sont susceptibles de constituer un produit alimentaire complet.

Il existe par ailleurs, d'autres produits alimentaires rapportés sur des bâtonnets à la manière d'une glace. Toutefois, les produits existants ne sont pas complets à la manière d'une pizza ou d'un sandwich et ne sont généralement pas appétissants. Enfin, ces produits ont du mal à conserver leur tenue lorsqu'on les mange et sont relativement complexes à réaliser.

Aussi, la présente invention vise à pallier les inconvénients des produits existants en proposant une alternative, à savoir un produit alimentaire comprenant une partie centrale enrobée de pâte, obtenu à partir d'un procédé de fabrication simple à mettre en oeuvre.

A cet effet, l'invention a pour objet un procédé de fabrication d'un produit alimentaire comprenant une partie centrale enrobée de pâte, caractérisé en ce qu'il consiste à déposer la partie centrale dans un moule comprenant au moins une alvéole, ladite alvéole ayant des dimensions appropriées de manière à ménager un espace entre ladite partie centrale et la paroi de l'alvéole, à injecter de la pâte dans l'alvéole de manière à enrober la partie centrale et à cuire l'ensemble partie centrale/pâte.

D'autres caractéristiques et avantages ressortiront de la description qui va suivre de l'invention, description donnée à titre d'exemple uniquement, en regard des dessins annexés sur lesquels :
- la figure 1 est une vue en coupe longitudinale du produit obtenu selon le procédé de l'invention,
- la figure 2 est une vue en perspective d'un dispositif selon l'invention comprenant quatre alvéoles,
- la figure 3 est une vue de dessus d'une partie du moule illustrant une alvéole,
- la figure 4 est une coupe selon la ligne IV-IV de la figure 3,
- la figure 5 est une coupe selon la ligne V-V de la figure 3,
- la figure 6A est un schéma illustrant les moyens d'injection de la pâte selon un premier état,
- la figure 6B est un schéma illustrant les moyens d'injection de la pâte selon un second état, et
- la figure 7 est une vue illustrant en détails le dispositif selon l'invention.

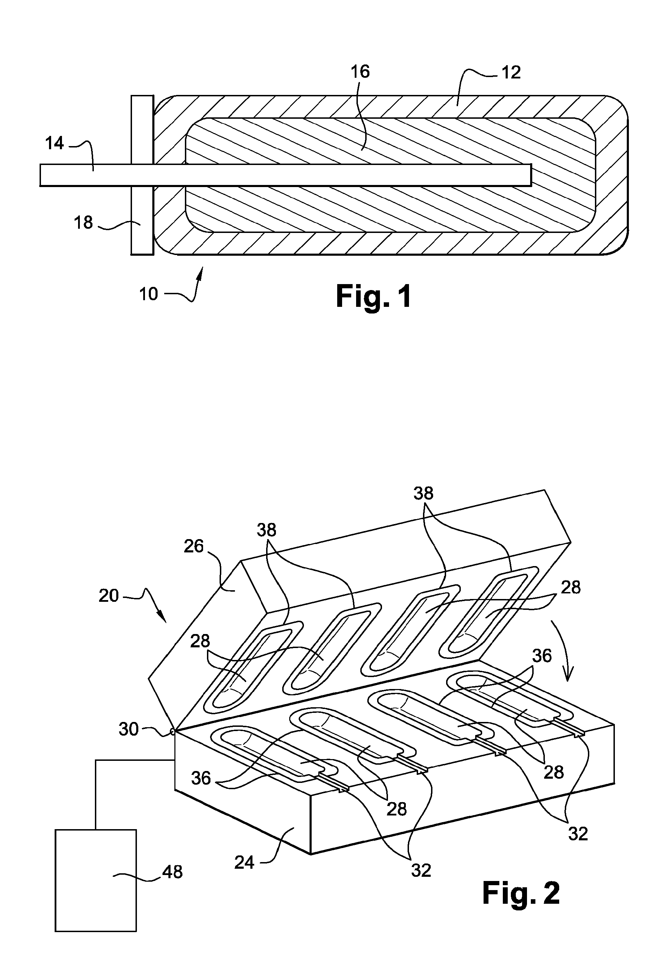

Sur la figure 1, on a représenté en 10 un produit alimentaire obtenu à partir du procédé selon l'invention.

Ce produit comprend une partie centrale ou noyau 12, éventuellement rapportée sur un support 14 longiligne tel qu'un bâtonnet, ladite partie centrale 12 étant enrobée de pâte 16.

La partie centrale 12 peut être de différentes natures et formes. Ainsi, selon les cas, en fonction du moule utilisé pour la fabriquer, cette partie centrale peut avoir la forme d'une saucisse ou d'un parallélogramme ou autre.

Selon les variantes, la partie centrale peut être à base de viandes hachées ou non, introduites ou non dans un boyau naturel ou synthétique, à base de poissons, de légumes ou de fruits, à base de produits laitiers ou de chocolat, à base d'ingrédients de pizza, de quiche, ou autres.

Selon les variantes, la partie centrale 12 peut être précuite ou crue avant d'être enrobée de pâte.

Grâce à sa nature, la partie centrale 12 présente une forme solide avant d'être enrobée afin de faciliter sa manipulation éventuellement à l'aide du support 14.

A titre d'exemple, la partie centrale 12 comprend une membrane végétale, pelée ou autre contenant la totalité de la garniture telle que de la viande hachée ou non, du poisson, du fromage, de la pizza, des fruits, etc...

Selon un mode de réalisation préféré, la partie centrale 12 est embrochée sur le bâtonnet 14 avant d'être enrobée. En variante, cette opération peut être réalisée après l'enrobage de pâte et la cuisson. En fonction du degré de mécanisation, cette opération peut être réalisée de manière mécanique ou manuelle.

La pâte 16 utilisée pour l'enrobage de la partie centrale 12 peut avoir différentes natures et être à base notamment d'un mélange de farine, d'eau ou de lait.

Avant cuisson, la pâte se présente sous forme liquide ou pâteuse afin de faciliter sa répartition autour de la partie centrale 12 avant de se solidifier lors de la cuisson.

Selon l'invention, on obtient un produit complet ayant une bonne tenue lorsqu'on le mange en raison de la présence de l'enrobage de pâte.

Avantageusement, un disque 18 peut être monté coulissant sur le bâtonnet 14 pour permettre de pousser progressivement le produit alimentaire sur le bâtonnet lors de la dégustation.

Sur les figures 2 à 7, on a représenté un dispositif 20 appelé par la suite moule permettant de fabriquer le produit alimentaire selon l'invention. Ce moule permet notamment l'enrobage de la partie centrale 12 avec de la pâte 16 et la cuisson de l'ensemble (partie centrale/pâte).

Selon l'invention, le moule comprend au moins une alvéole 22 dans laquelle est susceptible d'être disposée une partie centrale 12, des moyens d'injection de la pâte ainsi que des moyens de chauffage.

Selon un mode de réalisation préféré, le moule comporte deux parties 24 et 26, avec chacune au moins une empreinte 28, lesdites empreintes étant susceptibles d'être disposées en vis-à-vis de manière à former une alvéole 22 lorsque les parties sont placées l'une contre l'autre. Selon un mode de réalisation, chaque partie du moule comprend plusieurs empreintes 28 formant plusieurs alvéoles.

Des moyens d'articulation 30 sont prévus entre lesdites deux parties 24 et 26 de manière à permettre le mouvement d'au moins une des parties par rapport à l'autre. Selon un mode de réalisation préféré, ces moyens d'articulation se présentent sous la forme d'une charnière. Ces moyens d'articulation ne sont pas plus détaillés car ils sont à la portée de l'homme du métier.

Des moyens de maintien sont prévus afin de maintenir les deux parties plaquées l'une contre l'autre de manière à ce que les deux empreintes disposées en vis-à-vis forment une alvéole. Avantageusement, ces moyens de maintien assurent le plaquage des deux parties du moule l'une contre l'autre notamment lorsque la pâte est injectée, éventuellement sous pression, autour de la partie centrale.

Comme pour les moyens d'articulation, ces moyens de maintien ne sont pas décrits car ils sont à la portée de l'homme du métier.

Avantageusement, les empreintes 28 comprennent un revêtement anti-adhérent tel que par exemple en silicone, en Polytétrafluoroethylène ou en carton aluminé. Ce type de revêtement doit permettre le refroidissement instantané ou rapide des parois des empreintes 28.

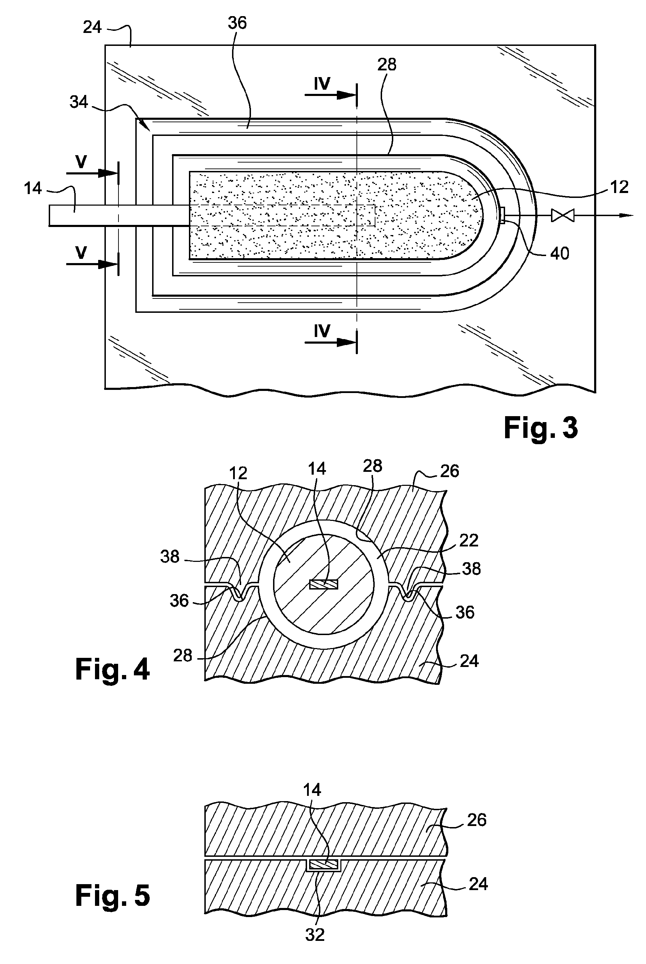

Chaque alvéole a des dimensions appropriées de manière à ménager un espace, de préférence tout autour de la partie centrale, entre ladite partie centrale et la paroi de l'alvéole de manière à permettre l'enrobage de ladite partie centrale par la pâte 16 comme illustré sur la figure 3. L'espace prévu entre la partie centrale et la paroi de l'alvéole peut varier en fonction notamment de la fluidité de la pâte et de la pression d'injection de la pâte.

Selon une autre variante, la partie centrale 12, et éventuellement le bâtonnet 14, sont revêtus d'un emballage susceptible de se déformer lorsqu'on injecte la pâte à l'intérieur et de supporter les températures de cuisson. Ainsi, selon ce mode de réalisation, on dépose dans l'empreinte la partie centrale 12 enveloppée de l'emballage déformable dans l'empreinte. A la fermeture du moule, les moyens d'injection pénètrent dans l'emballage déformable et injectent la pâte dans ledit emballage autour de la partie centrale 12. Ensuite, après cuisson, on obtient un produit déjà emballé ne nécessitant aucune manipulation pour son conditionnement.

Les moyens de chauffage peuvent ou non être incorporés au moule.

Selon un mode de réalisation préféré, au moins une résistance est intégrée à l'intérieur du moule. Cette ou ces résistances sont disposées de manière adéquate afin d'optimiser le chauffage de la ou des parois de l'alvéole ou des alvéoles.

En variante, on pourrait imaginer d'autres modes de chauffage tels que par micro-onde par exemple.

Avantageusement, le moule comprend pour chaque alvéole une gorge 32 permettant de recevoir un bâtonnet 14.

Selon une autre caractéristique, une barrière d'étanchéité 34 est prévue autour de chaque empreinte de manière à limiter la propagation de la pâte en dehors de l'alvéole 22, notamment au moment de l'injection de la pâte et/ou lors de la cuisson. Selon un mode de réalisation préféré, l'une des parties du moule comprend une gorge 36 disposée autour de chaque empreinte dans laquelle est susceptible de se loger une nervure en saillie 38 prévue sur l'autre partie du moule. Lorsque les deux parties du moule sont disposées l'une contre l'autre, la nervure 38 pénètre dans la gorge 36 de manière à former une barrière d'étanchéité, la gorge et la nervure ayant des formes conjuguées.

Selon une autre caractéristique, le moule 20 comprend des moyens de dégazage permettant d'évacuer l'air sous pression lors de l'injection de la pâte et/ou de la cuisson pour éviter que le moule ne s'ouvre.

De préférence, chaque alvéole 22 comprend une soupape 40 permettant d'évacuer l'air présent à l'intérieur de l'alvéole vers l'extérieur du moule lorsque l'air présent à l'intérieur de l'alvéole dépasse un certain seuil.

Avantageusement, la soupape 40 est disposée à l'opposée de la gorge 32 prévue pour le bâtonnet.

Selon une autre caractéristique de l'invention, les moyens d'injection comprennent pour chaque alvéole une aiguille 42 susceptible de se déplacer.

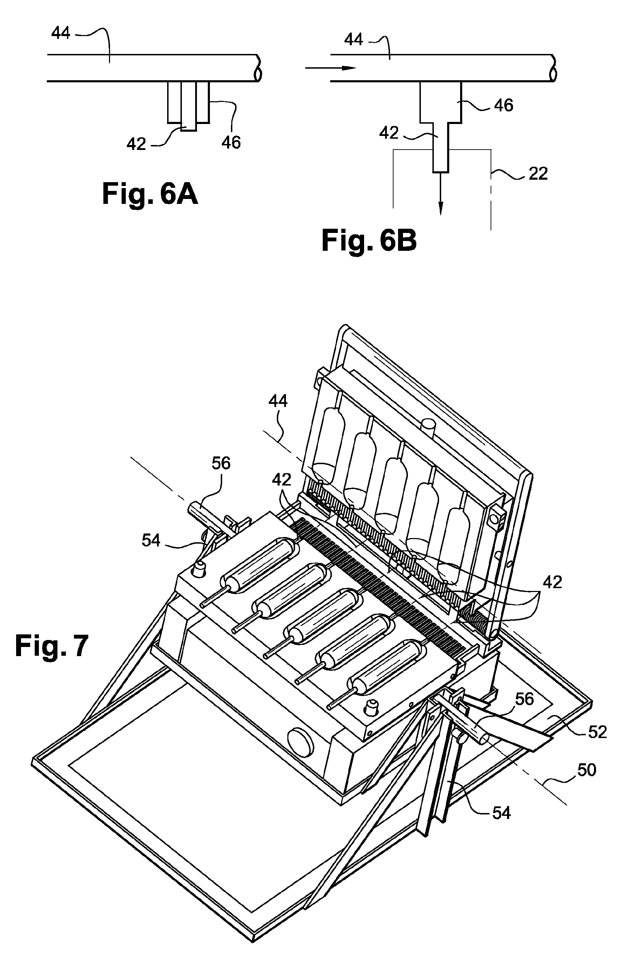

Selon un mode de réalisation illustré par les figures 6A et 6B, les moyens comprennent un conduit 44 permettant d'alimenter au moins une alvéole 22 et de préférence toutes les alvéoles, ainsi que pour chaque alvéole un conduit fixe 46 ainsi qu'une partie mobile 42 formant une aiguille susceptible de se translater afin d'occuper deux positions, une première position rétractée, illustrée par la figure 6A, dans laquelle aucune partie de l'aiguille 42 n'est présente à l'intérieur de l'alvéole, notamment au moment de la cuisson, et une seconde position déployée, illustrée par la figure 6B, dans laquelle au moins l'extrémité de l'aiguille 42 est introduite dans l'alvéole au moment de l'injection de la pâte.

Ainsi, l'aiguille 42 se rétracte lorsque la quantité de pâte est injectée.

Avantageusement, l'aiguille 42 passe au travers de l'ouverture prévue pour la soupape 40.

Selon les cas, les moyens d'injection peuvent être prévus sur l'une ou l'autre des parties du moule de manière indifférente.

Avantageusement, une réserve 48 de pâte est prévue pour alimenter le moule. Selon une autre caractéristique de l'invention, des moyens de balancement du moule 20 sont prévus pour permettre une meilleure répartition de la pâte autour de la partie centrale 12. Ces moyens de balancement sont représentés sur la figure 7.

Le moule peut basculer autour d'un axe 50. A cet effet, le dispositif comprend un bâti 52 avec des montants 54 susceptibles de supporter des axes 56 prévus de part et d'autre du moule, au moins un actionneur non représenté étant susceptible d'engendrer le mouvement de basculement.

A titre d'exemple, les températures de cuisson varient de l'ordre de 175 à 275°C pour un temps de cuisson de l'ordre de 2 minutes 30 secondes pour une température de l'ordre de 275°C .

Bien entendu, l'invention n'est évidemment pas limitée au mode de réalisation représenté et décrit ci-dessus, mais en couvre au contraire toutes les variantes, notamment en ce qui concerne les différents éléments constituants le moule ainsi que la nature de la pâte et de la partie centrale.

## Revendications

1. Procédé de fabrication d'un produit alimentaire comprenant une partie centrale (12) enrobée de pâte (16), **caractérisé en ce qu'**il consiste à déposer la partie centrale (12) dans un moule comprenant au moins une alvéole (22), ladite alvéole ayant des dimensions appropriées de manière à ménager un espace entre ladite partie centrale (22) et la paroi de l'alvéole (22), à injecter de la pâte (16) dans l'alvéole de manière à enrober la partie centrale (12) et à cuire l'ensemble partie centrale/pâte.

2. Procédé de fabrication d'un produit alimentaire selon la revendication 1, **caractérisé en ce que** le moule (20) est soumis à un mouvement de basculement de manière à assurer une meilleure répartition de la pâte (16) autour de la partie centrale (12).

3. Procédé de fabrication d'un produit alimentaire selon la revendication 1 ou 2, **caractérisé en ce que** la partie centrale (12) est revêtue d'un emballage susceptible de se déformer lorsqu'on injecte de la pâte (16).

4. Dispositif pour la mise en oeuvre du procédé selon l'une quelconque des revendications 1 à 3, **caractérisé en ce qu'**il comprend un moule avec au moins une alvéole (22) susceptible de recevoir une partie centrale (12) ayant des dimensions appropriées de manière à ménager un espace entre ladite partie centrale (22) et la paroi de l'alvéole (22) et des moyens d'injection de la pâte.

5. Dispositif selon la revendication 4, **caractérisé en ce que** le dispositif comprend des moyens de chauffage.

6. Dispositif selon la revendication 4 ou 5, **caractérisé en ce que** le moule comporte deux parties (24, 26), avec chacune au moins une empreinte (28), lesdites empreintes étant susceptibles d'être disposées en vis-à-vis de manière à former une alvéole (22) lorsque les parties sont placées l'une contre l'autre.

7. Dispositif selon la revendication 6, **caractérisé en ce que** les empreintes comprennent un revêtement anti-adhérent.

8. Dispositif selon la revendication 6 ou 7, **caractérisé en ce qu'**une barrière d'étanchéité (34) est prévue autour de chaque empreinte de manière à limiter la propagation de la pâte en dehors de l'alvéole (22), notamment au moment de l'injection de la pâte et/ou lors de la cuisson.

9. Dispositif selon l'une quelconque des revendications 4 à 8, **caractérisé en ce que** les moyens d'injection comprennent pour chaque alvéole une aiguille susceptible de se déplacer afin d'occuper deux positions, une première position rétractée, dans laquelle aucune partie de l'aiguille (42) n'est présente à l'intérieur de l'alvéole, notamment au moment de la cuisson, et une seconde position déployée dans laquelle au moins l'extrémité de l'aiguille (42) est introduite dans l'alvéole au moment de l'injection de la pâte.

10. Dispositif selon l'une quelconque des revendications 4 à 9, **caractérisé en ce qu'**il comprend des moyens de balancement du moule pour permettre une meilleure répartition de la pâte autour de la partie centrale (12).

11. Dispositif selon l'une quelconque des revendications 4 à 10, **caractérisé en ce que** chaque alvéole comprend une soupape (40) permettant d'évacuer l'air sous pression.
